# EUROPÄISCHE PATENTSCHRIFT

(11) **EP 2 776 285 B1**
(45) Veröffentlichungstag und Bekanntmachung des Hinweises auf die Patenterteilung: **20.04.2016**
(21) Anmeldenummer: 12730935.9
(22) Anmeldetag: 27.06.2012
(51) Int. Cl.: B60R 13/08, F02B 77/11, F16L 59/02, F01N 13/14

(54) **WÄRME-ABSCHIRMELEMENT MIT ELASTISCHEM ENDBEREICH**
HEAT PROTECTION ELEMENT WITH ELASTIC END REGION
ÉLÉMENT DE PROTECTION CONTRE LA CHALEUR COMPORTANT UNE ZONE D'EXTRÉMITÉ ÉLASTIQUE

(30) Priorität: 10.11.2011 DE 102011086080
(43) Veröffentlichungstag der Anmeldung: 17.09.2014
(73) Patentinhaber: Federal-Mogul Sealing Systems Gmbh, 57562 Herdorf (DE)
(72) Erfinder: KLINNER, Manfred, 53844 Troisdorf (DE); GADOMSKI, Bartosch, 51399 Burscheid (DE)
(74) Vertreter: Becker Kurig Straus
(86) Internationale Anmeldenummer: PCT/EP2012/062435
(87) Internationale Veröffentlichungsnummer: WO 2013/068133

(56) Entgegenhaltungen:
- EP-A1- 2 017 135
- WO-A1-2005/110813
- DE-A1-102006 008 946
- DE-A1-102008 030 708

## Beschreibung

Die vorliegende Erfindung betrifft ein Wärme-Abschirmelement wie ein Hitzeschild bzw. einen Wärme-Abschirmkanal mit einem elastischen End- bzw. Randbereich.

Herkömmliche Hitzeschilder oder Wärme-Abschirmbleche finden insbesondere im Automobilbau Anwendung und können dort beispielsweise heiße Bauteile wie eine Abgasanlage oder einen Turbolader thermisch abschirmen.

Herkömmliche Hitzeschilder oder Wärme-Abschirmbleche können beispielsweise bei Steinschlag insbesondere in einem Randbereich bleibend verformt werden, wodurch es zu einem Versagen der Abschirmung kommen kann. Eine derartige Verformung kann ebenfalls einen Austausch des verformten Hitzeschilds notwendig machen.

Es ist daher wünschenswert, ein Wärme-Abschirmblech bereitzustellen, das eine höhere Toleranz gegenüber Verformungen und insbesondere gegen Steinschlag aufweist.

Üblicherweise würde man ein Bauteil, das durch Beschädigungen gefährdet ist, steifer oder stabiler ausführen, um Beschädigungen zu vermeiden.

Die DE 10 2006 008 946 zeigt ein Wärme-Abschirelement nach dem Oberbegriff des Anspruchs 1.

Die vorliegende Erfindung basiert darauf, anstelle einer Verstärkung einen Bereich eines Wärme-Abschirmblechs elastisch auszuführen.

Die vorliegende Erfindung stellt ein Wärme-Abschirmelement nach Anspruch 1 mit einem Wärme-Abschirmblech aus mindestens einer Lage aus Blech und mindestens einem Randelement, bereit, das aus einem elastischen Material gefertigt ist, und das mit dem Wänne-Abschirmblech verbunden ist.

Das Randelement soll erfindungsgemäß aus einem elastischen Material hergestellt werden, um zu erreichen, dass das Wärme-Abschirmelement gegenüber den zu erwartenden thermischen Belastungen ausreichend stabil ist. Das elastische Material kann ein hitzebeständiges Silikonmaterial umfassen. Das elastische Material kann ebenfalls ein hitzebeständiges Fluor-Polymermaterial umfassen. Das elastische Material kann ein hitzebeständiges Fasermaterial wie ein Geflecht oder ein Vlies umfassen. Das Randelement kann zudem mit Verstärkungselementen versehen sein, um eine Befestigung an dem Wärme-Abschirmblech 4 zu verbessern. Das Randelement 8 kann zudem mit Wellen oder Rippen versehen und/oder als Verbundmaterial ausgeführt seien, um eine erforderliche Festigkeit zu erreichen.

Das Wärme-Abschirmblech kann aus Aluminium und/oder Stahlblech ein- oder mehrlagig hergestellt sein. Das Wärme-Abschirmblech kann weiterhin mit Stoffen zur Wärme- und Schalldämmung versehen sein.

In einer beispielhaften Ausführungsform des Wärme-Abschirmelements ist das mindestens eine Randelement direkt an das Wärme-Abschirmblech angeformt. Es ist ebenso vorgesehen, das mindestens eine Randelement direkt an das Wärme-Abschirmblech anzukleben bzw. daran zu befestigen.

In einer einfachen Ausführungsform wird das Randelement direkt an dem Wärme-Abschirmblech angeformt oder angegossen. Diese Ausführungsform gestattet es, mit wenig Materialaufwand eine feste und dauerhafte Verbindung zwischen dem Randelement und dem Wärme-Abschirmblech zu erreichen. Dies kann beispielsweise durch einen gelochten Rand des Wärme-Abschirmblechs erreicht werden, durch den das elastische Material wie z. B. Silikon- oder Fluor-Polymermaterial bei der Herstellung fließen kann.

Es ist ebenso vorgesehen, das Wärme-Abschirmblech mit einer Profilierung oder mit einem Oberflächenprofil zu versehen, um die Haftung zwischen dem Randelement und dem Wärme-Abschirmblech zu verbessern.

Bei einer anderen beispielhaften Ausführungsform ist das mindestens eine Randelement mit Schrauben oder Nieten an dem Wärme-Abschirmblech befestigt.

Nach der Erfindung weisen das mindestens eine Randelement und das Wärme-Abschirmblech jeweils mindestens eine Befestigungsausformung auf, die miteinander in Eingriff stehen, und so das Randelement mit dem Wärme-Abschirmblech verbinden. Durch entsprechende komplementäre angeformte Befestigungsausformungen können die Teile ohne zusätzliche Befestigungsmittel miteinander verbunden werden, was die Herstellungskosten und die Herstellungszeit verringern kann.

In einer zusätzlichen beispielhaften Ausführungsform ist die mindestens eine Befestigungsausformung an dem Wärme-Abschirmblech als eine Umbördelung ausgeführt, und die Befestigungsausformungen an dem Randelement umfasst einen umgeschlagenen Bereich, wobei die Umbördelung und der umgeschlagene Bereich miteinander in Eingriff stehen. In dieser Ausführungsform greifen die Umbördelung und der um- bzw. zurückgeschlagene Bereich ineinander und halten so die beiden Teilelemente zusammen. Diese Ausführungsform eignet sich insbesondere for rohrförmige Wärme-Abschirmelemente, da dort nicht die Gefahr besteht, dass sich das Randelement seitlich aus dem Eingriff schiebt und dadurch löst.

In einer beispielhaften Ausführungsform weisen die in Eingriff stehenden Befestigungsausformungen an dem Wärme-Abschirmblech mindestens einen Haken auf, und die Befestigungsausformungen an dem Randelement umfassen mindestens eine Öffnung, wobei sich jeweils ein Haken durch jeweils eine Öffnung erstreckt. Die Haken können dabei direkt aus einer Blechlage des Wärme-Abschirmblechs geformt sein.

Bei einer anderen beispielhaften Ausführungsform weisen die in Eingriff stehenden Befestigungsausfonnungen an dem Wärme-Abschirmblech mindestens eine Profilierung auf, und die Befestigungsausformungen an dem Randelement umfassen mindestens eine komplementäre Profilierung, sodass die Profilierung und die komplementäre Profilierung aneinanderliegen und ineinandergreifen. Durch das Ineinandergreifen der Profilierungen kann ein Formschluss zwischen dem Randelement und dem Wärme-Abschirmblech erreicht werden, durch den diese Elemente miteinander verbunden sind.

In einer weiteren beispielhaften Ausführungsform ist bzw. sind das Wärme-Abschirmblech und/oder das Randelement in der Nähe der Befestigungsausformungen mit Verliersicherungen versehen, um zu verhindern, dass sich die in Eingriff stehenden Elemente wieder voneinander lösen. Eine Verliersicherung kann beispielsweise als eine elastische Lasche ausgeführt sein, die ein Abziehen des Randelements von dem Wärme-Abschirmblech verhindert oder zumindest deutlich erschwert.

In einer beispielhaften Ausführungsform des Wärme-Abschirmelements ist, bzw. sind das Wärme-Abschirmblech und/oder das Randelement mit Führungsschrägen versehen, die das Ineinandergreifen der Befestigungsausformungen bei der Montage vereinfachen. Durch Führungsschrägen lässt sich beispielsweise ein elastisches Bauelement, wie das Randelement viel leichter über entsprechende Befestigungsausformungen führen als ohne Führungsschrägen.

Bei einer anderen beispielhaften Ausführungsform des Wärme-Abschirmelements kann das Randelement werkzeuglos mit dem Wärme-Abschirmblech in Eingriff gebracht werden. In dieser Ausführungsform können die Befestigungsausformungen als Haken, Ösen, Schnapplaschen oder elastische Zungen ausgeführt sein. Bei einer geeigneten Ausführung der Befestigungsausformungen kann eine Befestigung des Randelements an dem Wärme-Abschirmblech durch ein einfaches Aufschieben des Randelements auf das Wärme-Abschirmblech erreicht werden.

In einer weiteren beispielhaften Ausführungsform umfasst das Wärme-Abschirmblech weiter Verbindungsausformungen, um das Wärme-Abschirmblech mit einem weiteren anderen Wärme-Abschirmblech zu verbinden. Diese Ausgestaltung kann dazu dienen, um aus mehreren Wärme-Abschirmblechen ein größeres Wärme-Abschirmelement, wie einen Wärme-Abschirmungskanal zusammenzusetzen. Es ist ebenfalls vorgesehen, aus mehreren Wärme-Abschirmblechen ein rohrförmiges Wärme-Abschirmelement wie einen Wärme-Abschirmungskanal zu bilden.

In einer zusätzlichen beispielhaften Ausführungsform umfasst das Randelement Verbindungsausformungen, um das Randelement mit einem weiteren anderen Randelement aus elastischem Material zu verbinden. Mit dieser Ausnihrungsform kann ein rohrförmiges Wärme-Abschirmelement beispielsweise aus zwei schalenförmigen Wärme-Abschirmelementen zusammengesetzt werden, wobei ein ringförmiges Randelement ebenfalls aus zwei halbkreisförmigen Randelementen zusammengesetzt werden kann. Durch die Verbindungsausformungen können die Ränder dann zu einem geschlossenen Rohr zusammengesetzt werden. Das elastische Material des anderen Randelements kann ein hitzebeständiges Silikonmaterial sein. Das elastische Material des anderen Randelements kann ein hitzebeständiges Fluor-Polymermaterial umfassen. Das elastische Material des anderen Randelements kann ein hitzebeständiges Fasermaterial wie ein Geflecht oder ein Vlies umfassen. Das andere Randelement kann zudem mit Verstärkungselementen versehen sein, um eine Befestigung an dem Wärme-Abschirmblech zu verbessern. Das Randelement kann zudem mit Wellen oder Rippen versehen und/oder als Verbundmaterial ausgeführt seien, um eine erforderliche Festigkeit zu erreichen.

In einer beispielhaften Ausführungsform des Wärme-Abschirmelements ist das Randelement weiter zumindest teilweise mit einer reflektierenden Beschichtung versehen. Eine reflektierende Beschichtung kann die Temperaturfestigkeit des Randelements aus einem Polymer weiter erhöhen, sodass auch Baugruppen mit dem Wärme-Abschinnelement abgeschirmt werden können, deren Temperatur die Temperaturfestigkeit eines ungeschützten Polymers übersteigt.

Bei einer anderen beispielhaften Ausführungsform ist das Randelement weiter als ein Verbundmaterial ausgeführt, auf dem eine Metallstruktur angebracht oder in dem eine Metallstruktur eingebracht ist. Es kann zum Beispiel vorgesehen werden, in das Material des Randelements Metallplättchen einzubringen, die eine Schuppenstruktur bilden. Derartige Metallschuppen können Wännestrahlung besser reflektieren, als es das elastische Polymer alleine vermag. Eine Schuppenstruktur, die in ein Elastomer eingebettet ist, kann ebenfalls viel elastischer ausgeführt werden als ein durchgehendes Metallblech. Es ist ebenfalls vorgesehen, Schuppen zu verwenden, die sich durch das gesamte Randelement erstrecken und auf der Rückseite des Wärme-Abschrimelements als Kühlrippen vorstehen und die thermische Belastung des Polymers des Randelements verringern. Es ist ebenso vorgesehen, das Randelement durch Glas- oder Kohlefasern zu verstärken oder abzuschirmen.

In einer weiteren beispielhaften Ausführungsform des Wärme-Abschirmelements ist das Randelement weiter mit einer Oberflächenstruktur versehen, um die Schalldämmungseigenschaften des Wärme-Abschirmelements zu verbessern.

Es kann in diesem Zusammenhang vorteilhaft sein, das Randelement mit Rippen oder Reflexionskanten oder mit Hohlräumen zu versehen, um Schallschwingungen aufzunehmen, abzuleiten, oder zu streuen.

### Beschreibung der Figuren.

Figuren 1A und 1B zeigen Ansichten einer Ausführungsform eines erfindungsgemäßen Wärme-Abschirmelements.
Figuren 2A bis 2D zeigen Ansichten einer anderen Ausführungsform eines erfindungsgemäßen Wärme-Abschirmelements.
Figuren 3 und 4 zeigen jeweils eine Teil-Schnittansicht durch jeweils einen Randbereich von zwei verschiedenen erfindungsgemäßen Wärme-Abschirmelementen.
Figur 5 zeigt eine Schnittansicht durch einen Randbereich eines herkömmlichen Wänne-Abschirmblechs.

Sowohl in der Beschreibung als auch in den Figuren werden gleiche oder ähnliche Bezugszeichen verwendet, um gleiche oder ähnliche Elemente zu bezeichnen.

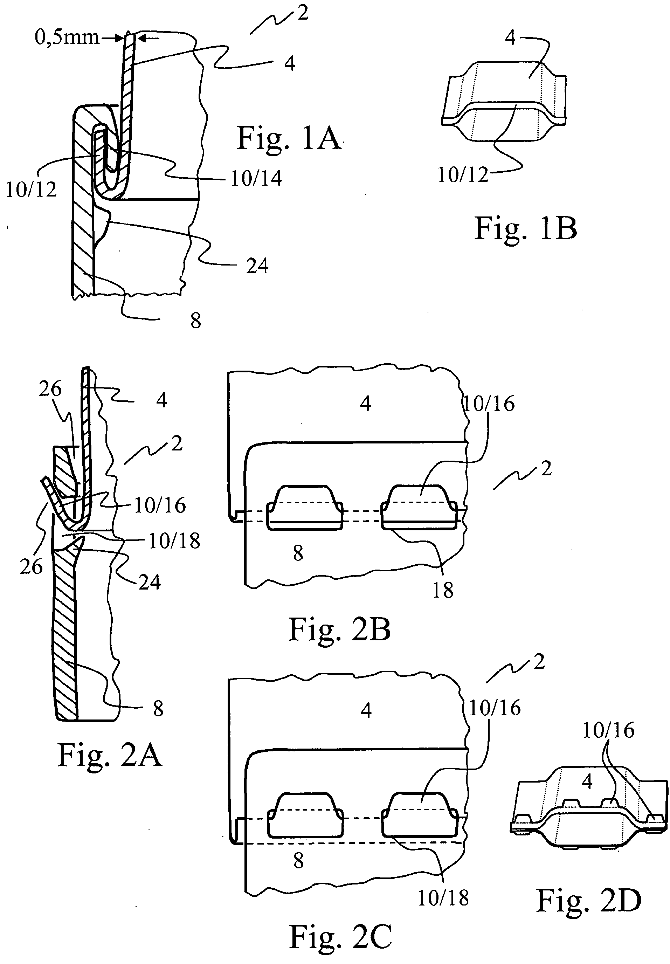

Figur 1A zeigt eine Teil-Schnittansicht eines erfindungsgemäßen Wärme-Abschirmelements 2 in einem Bereich, an dem Randelement 8 aus einem elastischen Material mit einem dem Wärme-Abschirmblech 4 verbunden ist. Das elastische Material kann ein hitzebeständiges Silikonmaterial, ein hitzebeständiges Fluor-Polymermaterial und/oder Fasermaterial mit hitzebeständigen Fasern umfassen. Die Verbindung wird durch Verbindungsausformungen 10 erreicht. Die Verbindungsausformung 10 des Wärme-Abschirmblechs 4 ist als ein umgebördelter Bereich 12 ausgeführt. Die Verbindungsausformung 10 des Randelements 8 ist als ein zurückgeschlagener bzw. zurückgeführter Bereich 14 ausgeführt. Der umgebördelte Bereich 12 steht mit dem zurückgeschlagenen Bereich 14 in Eingriff. Eine Verliersicherung 24 verhindert, dass das Randelement 8 weiter nach oben rutscht, wodurch verhindert wird, dass der umgebördelte Bereich 12 mit dem zurückgeschlagenen Bereich 14 außer Eingriff kommen kann.

Es ist ebenso vorgesehen, den umgebördelten Bereich 12 durch ein Presswerkzeug zu verformen, so dass der umgebördelte Bereich 12 den zurückgeschlagenen Bereich 14 einklemmt, und dadurch verhindert, dass sich das Randelement 8 von dem Wärme-Abschirmblech 4 lösen kann.

Figur 1B zeigt eine mögliche Gestaltung des Wärme-Abschirmblechs 4 als einen im Wesentlichen rohrförmigen Kanal. Der Kanal ist durch zwei u-förmig gebogene Bleche gebildet, die an den Enden der Schenkel miteinander verbunden sind. An dem vorderen Ende des Kanals ist der umgebördelte Bereich 12 zu erkennen, der als Befestigungsausformung 10 dient, und der mit einem entsprechenden, nicht dargestellten, Randelement 8 in Eingriff gebracht werden kann.

Figur 2A zeigt eine Teil-Schnittansicht durch eine andere Ausführungsform eines erfindungsgemäßen Wärme-Abschirmelements 2 in einem Bereich, an dem Randelement 8 aus einem elastischen Material mit einem dem Wärme-Abschirmblech 4 verbunden ist. Das elastische Material kann ein hitzebeständiges Silikonmaterial sein. Das elastische Material kann ein hitzebeständiges Fluor-Polymermaterial umfassen. Das elastische Material kann ein hitzebeständiges Fasermaterial wie ein Geflecht oder ein Vlies umfassen. Das Randelement kann zudem mit Verstärkungselementen versehen sein, um eine Befestigung an dem Wärme-Abschirmblech 4 zu verbessern. Das Randelement 8 kann zudem mit Wellen oder Rippen versehen und/oder als Verbundmaterial ausgeführt seien, um eine erforderliche Festigkeit zu erreichen. Die Verbindung wird hier durch Befestigungsausformungen 10 erreicht. Die Befestigungsausformung 10 des Wärme-Abschirmblechs 4 ist als ein Haken 16 bzw. hakenförmige Lache ausgeführt. Die Verbindungsausformung 10 des Randelements 8 ist als Öffnungen 18 ausgeführt. Der Haken 16 verläuft durch die Öffnung 16 und befestigt so das Randelement 8 an dem Wärme-Abschirmblech 4. Eine Verliersicherung 24 verhindert auch hier, dass das Randelement 8 weiter nach oben rutschen kann. Durch die Verliersicherung 24 wird verhindert, dass der Haken 16 aus der Öffnung 18 rutscht.

Das Randelement ist zudem mit einer Führungsschräge 26 versehen, was eine werkzeuglose Montage des Randelements 8 an dem Wärme-Abschirmblech 4 ermöglicht bzw. erleichtert. Zur Montage muss lediglich das Randelement 8 auf das Wärme-Abschirmblech 4 geschoben werden, bis die Haken 16 in die Öffnungen 18 eingreifen.

Es ist ebenso vorgesehen, die Haken durch ein Werkzeug zu verformen, so dass sie das Randelement 8 im Bereich der Öffnungen 18 einklemmen.

Figur 2B zeigt eine Teil-Aufsicht auf den Bereich der Teil-Schnittansicht von Figur 2A. Wie in dem Bild zu erkennen ist, sind durch die Form der Haken 16 die Öffnungen 18 nicht vollständig geschlossen. Diese kleinen Öffnungen können jedoch durch entsprechend gewählte Verliersicherungen geschlossen werden.

Figur 2C zeigt eine Teilaufsicht einer leicht abgewandelten Version des in der Figur 2B dargestellten Wärme-Abschirmelements. Im Gegensatz zu der Version von Figur 2B sind die Haken 16 am ende eines ungebördelten bzw. umgefalteten Bereichs angeordnet. Durch diese Konstruktion verschließt der Umgebördelte Bereich den in Figur 2B offenen Teil der Öffnungen 18. Im Gegensatz der Version der Figur 2B kann mit einem leicht erhöhten Fertigungsaufwand eine geschlossene Verbindung zwischen dem Randelement 8 und dem Wärme-Abschirmblech 4 erzielt werden.

Figur 2D zeigt das Wärme-Abschirmblech 4 von Figur 2C in einer Schrägansicht ohne das montierte Randelement 8. In Figur 2D ist zu erkennen, dass die Haken 16 am Ende eines umgebördelten bzw. zurückgefalteten Bereichs angeordnet sind. Der umgebördelte bzw. zurückgefaltete Bereich kann dabei die Öffnungen 18 in einem nicht dargestellten Randelement 8 vollständig verschließen. Wie in Figur 1B bilden zwei Wänne-Abschirmbleche 4 einen Kanal. Vorzugsweise sind die beiden Wärme-Abschirmbleche 4 durch nicht dargestellte Verbindungsausformungen steckbar miteinander verbunden. Es ist ebenfalls vorgesehen zuerst die beiden Wärme-Abschirmbleche 4 zusammenzustecken, und dann ein gemeinsames Randelement 8 an beiden Wärme-Abschirmblechen 4 zu befestigen. Bevorzugt können die beiden Wärme-Abschirmbleche 4 auch durch das Randelement 8 miteinander verbunden werden. Eine derartige Ausführung ist insbesondere dann vorteilhaft, wenn die beiden Wärme-Abschirmbleche 4 durch ein gemeinsames Befestigungselement an einem Fahrzeug befestigt werden, und so das Randelement 8 im Betrieb keine Haltekräfte zwischen den beiden Wärme-Abschirmblechen 4 aufnehmen muss.

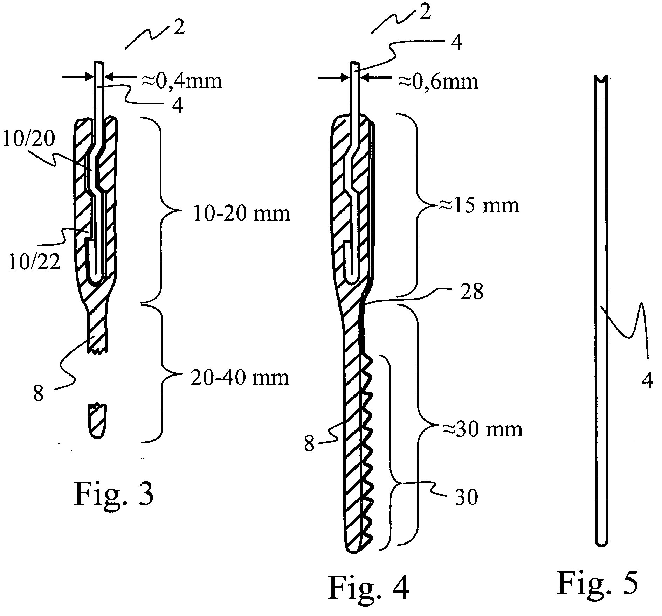

Figur 3 zeigt eine Teil-Schnittansicht durch einen Randbereich einer weiteren erfindungsgemäßen Ausführungsform eines Wärme-Abschirmelements 2. Das Wärme-Abschirmelement umfasst ein Wärme-Abschrimblech 4, das an einem Ende mit einer Profilierung 20 versehen ist. Die Profilierung 20 dient als Befestigungsausformung 10 des Wärme-Abschrimblechs 4. Das Wärme-Abschrimblech 4 ist am unteren Ende als Teil der Profilierung zurückgefaltet. Das Randelement 8 weist eine komplementäre Profilierung 22 auf, die die Befestigungsausformung 10 des Randelements 8 bildet. Die Profilierung kann sich, wie dargestellt, in einer Längsrichtung des Wärme-Abschirmelements 2 erstrecken. Es ist jedoch ebenfalls vorgesehen, dass sich die Profilierung auch senkrecht zu der Längsrichtung erstreckt und so ein verdrehen des Randelements 8 an beispielsweise einem runden Wärme-Abschirmelement 2 bzw. einem Wärme-Abschirmungskanal verhindert.

Figur 3 zeigt in der Teil-Schnittansicht auch mögliche Abmessungen für die Dicke des Wärme-Abschirmblechs von 0,4 mm, eine Länge eines Befestigungsbereichs zwischen 10 und 20 mm und einer möglichen freien Länge des Randelements 8 zwischen 20 und 40 mm, mit der sich das Randelement 8 über das Ende des Wärme-Abschirmblechs 4 hinaus erstreckt.

Entgegen der Darstellung kann das Randelement 8 ebenfalls noch eine Ausformung aufweisen, die von der Geraden abweicht. Es ist vorgesehen, dass sich das freie Ende des Randelements 8 auch aus Sicht einer abzuschirmenden Wärmequelle nach innen oder außen erstrecken kann.

Figur 4 zeigt ebenfalls eine Schnittansicht durch einen Randbereich einer weiteren Ausführungsform eines erfindungsgemäßen Wärme-Abschirmelements. Im Gegensatz zu der Ausführungsform von Figur 3 ist das Randelement 8 direkt durch Kleben, Angießen oder Anformen an dem Wärme-Abschirmblech 4 befestigt. Um die Verbindungsstelle zu verstärken, ist die Oberfläche des Wärme-Abschirmblechs 4 im Bereich der Verbindung zu dem Randelement 8 durch eine Profilierung vergrößert.

In Figur 4 sind die Abmessungen in der Teil-Schnittansicht dargestellt. Die Dicke des Wärme-Abschirmblechs beträgt 0,6 mm. Der Befestigungsbereich erstreckt sich über eine Länge von 15 mm. Die freie Länge des Randelements 8, mit der sich das Wärme-Abschirmelement 2 über das Ende des Wärme-Abschirmblechs 4 hinaus erstreckt liegt zwischen 20 und 40 mm.

Die Innenseite des Randelements 8 ist mit einer Beschichtung 28 versehen. Die Beschichtung kann die Reflexion von Wärmestrahlung verbessern und so die thermische Belastung des Randelements 8 verringern. Eine Beschichtung 28 kann ebenfalls dazu dienen, ein durchscheinendes Material des Randelements 8 für Wärmestrahlung undurchlässig zu machen.

Die Innenseite des Randelements 8 ist ebenfalls mit einer Schallschutz-Profilierung 30 versehen, die die Akustischen-Abschrimeigenschaften verbessern. Die Profilierung 30 ist hier lediglich als Teil der Beschichtung 28 dargestellt. Die Profilierung 30 kann ebenfalls direkt in das Randelement 8 eingebracht werden. Durch die Oberflächenprofilierung kann das Schallreflexionsverhalten beeinflusst werden. Es ist ebenfalls vorgesehen, Löcher oder Hohlräume, die in das Randelement 8 eingegossen sind, als Schallschutz-Profilierung 30 zu verwenden, um gezielt Frequenzbereiche aus Umgebungsgeräuschen herauszufiltern. Es ist ebenfalls vorgesehen, Gewebe in oder auf dem Randelement 8 an oder aufzubringen, um das Material des Randelements 8 zu verstärken oder die Schallabsorption des Randelements 8 zu verbessern. Es ist ebenfalls beabsichtigt Fasern nur teilweise in das Randelement 8 einzugießen, sodass ein Ende des Randelements 8 in einer Bürste ausläuft.

Figur 5 zeigt einen Teilschnitt durch ein herkömmliches, einlagiges Wärme-Abschirmblech 4, das in Bezug auf Figur 4 veranschaulichen soll, dass das erfindungsgemäße Wärme-Abschinnelement 2 im Vergleich zu einem herkömmlichen Wärme-Abschirmblech 4 nicht durch das Randelement 8 verlängert oder vergrößert wird. Bei dem erfindungsgemäßen Wärme-Abschirmelement 2 wird ein Randbereich anstelle aus Metall durch ein elastisches Randelement 8 gebildet, was die mechanischen Eigenschaften des Wärme-Abschirmelements 2 verbessert. Es ist ebenfalls möglich, mit Hilfe der vorliegenden Erfindung ein bestehendes Wärme-Abschirmblech zu vergrößern.

Es sollte klar sein, dass die vorliegende Erfindung nicht auf die in den Figuren dargestellten einzelnen Ausführungsformen beschränkt ist, sondern nur durch den in den Ansprüchen definieren Schutzumfang. Weiterhin sollen auch alle Kombinationen von Einzelmerkmalen, die einzeln in den jeweiligen Ausführungsformen offenbart sind, ebenfalls als offenbart erachtet werden. So sind insbesondere die Beschichtung des Randelements und die Schallschutz-Profilierung an dem Randelement auch bei allen anderen erfindungsgemäßen Ausführungen anwendbar.

### Bezugszeichenliste

- Wärme-Abschirmelement: 2
- Wärme-Abschirmblech: 4
- Randelement: 8
- Befestigungsausformung: 10
- Umbördelung: 12
- Umgeschlagener Bereich: 14
- Haken: 16
- Öffnung: 18
- Profilierung: 20
- Komplementäre Profilierung: 22
- Verliersicherung: 24
- Führungsschräge: 26
- Reflektierende Beschichtung: 28
- Oberflächenstruktur: 30

## Patentansprüche

1. Wärme-Abschirmelement (2) umfassend ein Wärme-Abschirmblech (4) aus mindestens einer Lage aus Blech,
weiter umfassend mindestens ein Randelement (8), das aus einem elastischen Material gefertigt ist, wobei das Randelement im wesentlichen außen an die Blechlage anschließt und sich von dieser weg erstreckt, und das am Rand des Wärme-Abschirmblechs (4) mit diesem verbunden ist, so dass es einen Randbereich des Abschirmelements bildet;
**dadurch gekennzeichnet, dass** das mindestens eine Randelement (8) und das Wärme-Abschirmblech (4) jeweils mindestens eine Befestigungsausformung (10) aufweisen, die miteinander in Eingriff stehen, und so das Randelement (8) mit dem Wärme-Abschirmblech (4) verbinden.

2. Wärme-Abschirmelement (2) nach Anspruch 1, wobei das elastische Material ein hitzebeständiges Silikonmaterial, ein hitzebeständiges Fluor-Polymermaterial und/oder ein hitzebeständiges Fasermaterial umfasst.

3. Wärme-Abschirmelement (2) nach Anspruch 1 oder 2, wobei das mindestens eine Randelement (8) direkt an dem Wärme-Abschirmblech (4) angeformt ist.

4. Wärme-Abschirmelement (2) nach Anspruch 1, 2 oder 3, wobei das mindestens eine Randelement (8) mit Schrauben oder Nieten an dem Wärme-Abschirmblech (4) befestigt ist.

5. Wärme-Abschirmelement (2) nach einem der vorhergehenden Ansprüche , wobei die mindestens eine Befestigungsausformung (10) an dem Wärme-Abschirmblech (4) als eine Umbördelung (12) ausgeführt ist, und die Befestigungsausformungen (10) an dem Randelement (8) einen umgeschlagenen Bereich (14) umfassen, wobei die Umbördelung (12) und der umgeschlagene Bereich (14) miteinander in Eingriff stehen.

6. Wärme-Abschirmelement (2) nach einem der Ansprüche 1 bis 4, wobei die in Eingriff stehenden Befestigungsausformungen (10) an dem Wärme-Abschirmblech (4) mindestens einen Haken (16) aufweisen, und die Befestigungsausformungen (10) an dem Randelement (8) mindestens eine Öffnung (18) umfassen, wobei sich jeweils ein Haken (16) durch jeweils eine Öffnung (18) erstreckt.

7. Wärme-Abschirmelement (2) nach einem der Ansprüche 1 bis 4, wobei die in Eingriff stehenden Befestigungsausformungen (10) an dem Wärme-Abschirmblech (4) mindestens eine Profilierung (20) aufweisen, und die Befestigungsausformungen (10) an dem Randelement (8) mindestens eine komplementäre Profilierung (22) umfassen, sodass die Profilierung (20) und die komplementäre Profilierung (22) aneinanderliegen und miteinander in Eingriff stehen.

8. Wärme-Abschirmelement (2) nach einem der vorhergehenden Ansprüche, wobei das Wärme-Abschirmblech (4) und/oder das Randelement (8) in der Nähe der Befestigungsausformungen (10) mit Verliersicherungen (24) versehen sind bzw. ist, um zu verhindern, dass sich die in Eingriff stehenden Befestigungselemente wieder voneinander lösen.

9. Wärme-Abschirmelement (2) nach einem der Ansprüche 1 oder 4 bis 8, wobei das Wärme-Abschirmblech (4) und/oder das Randelement (8) mit Führungsschrägen (26) versehen sind bzw. ist, die eine Montage vereinfachen.

10. Wärme-Abschirmelement (2) nach einem der vorhergehenden Ansprüche 5 bis 9, wobei das Randelement (8) werkzeuglos mit dem Wärme-Abschirmblech (4) in Eingriff gebracht werden kann.

11. Wärme-Abschirmelement (2) nach einem der vorhergehenden Ansprüche, wobei das Wärme-Abschirmblech (4) weiter Verbindungsausformungen umfasst, um das Wärme-Abschirmblech (4) mit einem weiteren anderen Wärme-Abschirmblech (4) zu verbinden.

12. Wärme-Abschirmelement (2) nach einem der Ansprüche 1 bis 10, wobei das Randelement (8) Verbindungsausformungen umfasst, um das Randelement (8) mit einem weiteren anderen Randelement (8) aus einem elastischen Material zu verbinden.

13. Wärme-Abschirmelement (2) nach Anspruch 12, wobei das elastische Material des weiteren anderen Randelements (8) ein hitzebeständiges Silikonmaterial, ein hitzebeständiges Fluor-Polymermaterial und/oder ein hitzebeständiges Fasermaterial umfasst.

14. Wärme-Abschirmelement (2) nach einem der vorhergehenden Ansprüche, wobei das Randelement (8) weiter zumindest teilweise mit einer reflektierenden Beschichtung (28) versehen ist.

15. Wärme-Abschirmelement (2) nach einem der vorhergehenden Ansprüche, wobei das Randelement (8) weiter als ein Verbundmaterial ausgeführt ist, auf dem eine Metallstruktur aufgebracht ist oder in dem eine Metallstruktur eingebracht ist.

16. Wärme-Abschirmelement (2) nach einem der vorhergehenden Ansprüche, wobei das Randelement (8) weiter mit einer Oberflächenstruktur (30) versehen ist, um die Schalldämmungseigenschaften des Wärme-Abschirmelements (2) zu verbessern.

## Claims

1. A heat shield element (2) comprising a heat shield plate (4) of at least one layer of sheet,
further comprising at least one boundary element (8) made from an elastic material, wherein said boundary element abuts substantially outside to said layer of sheet and extends away from said layer of sheet, and is connected to said heat shield plate (4) at the boundary of said heat shield plate (4) thereby forming a boundary section of said shield element;
**characterized in that** said at least one boundary element (8) and said heat shield plate (4), respectively comprises at least one shaped attachment portion (10) engaging with one another in order to connect said boundary element (8) with said heat shield plate (4).

2. A heat shield element (2) according to claim 1, wherein said elastic material comprises a heat resistant silicone material, a heat resistant fluoropolymer material and/or a heat resistant fiber material.

3. A heat shield element (2) according to claim 1 or 2, wherein said at least one boundary element (8) is molded directly to said heat shield plate (4).

4. A heat shield element (2) according to claim 1, 2 or 3, wherein said at least one boundary element (8) is attached to said heat shield plate (4) with screws or rivets.

5. A heat shield element (2) according to any of the preceding claims, wherein said at least one shaped attachment portion (10) at said heat shield plate (4) is realized as a beading (12), and said shaped attachment portions (10) at said boundary element (8) comprise a folded area (14), wherein said beading (12) engages with said folded area (14).

6. A heat shield element (2) according to any of the claims 1 to 4, wherein said engaging shaped attachment portions (10) at said heat shield plate (4) have at least one hook (16), and said shaped attachment portions (10) at said boundary element (8) comprise at least one opening (18), wherein one hook (16) extends through one opening (18), rerspectively.

7. A heat shield element (2) according to any of the claims 1 to 4, wherein said engaging shaped attachment portions (10) at said heat shield plate (4) have at least one profile (20), and said shaped attachment portions (10) at said boundary element (8) comprise at least one complementary profile (22), such that said profile (20) and said complementary profile (22) are abutting and engaging with one another.

8. A heat shield element (2) according to any of the preceding claims, wherein said heat shield plate (4) and/or said boundary element (8) are/is provided with loss protections (24) near said shaped attachment portions (10) in order to prevent that said engaging attachment elements detach again from one another.

9. A heat shield element (2) according to any of the claims 1 or 4 to 8, wherein said heat shield plate (4) and/or said boundary element (8) are/is provided with guidance bevels (26) facilitating an assembly.

10. A heat shield element (2) according to any of the claims 5 to 9, wherein said boundary element (8) can be engaged with said heat shield plate (4) without tools.

11. A heat shield element (2) according to any of the preceding claims, wherein said heat shield plate (4) further comprises shaped connection portions to connect said heat shield plate (4) with another different heat shield plate (4).

12. A heat shield element (2) according to any of the claims 1 to 10, wherein said boundary element (8) comprises shaped connection portions to connect said boundary element (8) with another different boundary element (8) of an elastic material.

13. A heat shield element (2) according to claim 12, wherein said elastic material of said further different boundary element (8) comprises a heat resistant silicone material, a heat resistant fluoropolymer material and/or a heat resistant fiber material.

14. A heat shield element (2) according to any of the preceding claims, wherein said boundary element (8) is further provided at least partly with a reflective coating (28).

15. A heat shield element (2) according to any of the preceding claims, wherein said boundary element (8) is further realized as a composite material to which a metal structure is applied or in which a metal structure is integrated.

16. A heat shield element (2) according to any of the preceding claims, wherein said boundary element (8) is further provided with a surface structure (30) to improve the noise insulation properties of said heat shield element (2).

## Revendications

1. Elément de protection contre la chaleur (2) comprenant une tôle de protection contre la chaleur (4) constituée d'au moins une couche de tôle,
comprenant en outre au moins un élément de bord (8), qui est fabriqué dans un matériau élastique, dans lequel l'élément de bord se rattache essentiellement à l'extérieur à la couche de tôle et s'étend en s'éloignant de celle-ci, et qui est reliée à celle-ci sur le bord de la tôle de protection contre la chaleur (4), de sorte qu'il forme une zone de bord de l'élément de protection ;
**caractérisé en ce qu'**au moins un élément de bord (8) et la tôle de protection contre la chaleur (4) présentent respectivement au moins un façonnage de fixation (10), qui viennent en prise l'un avec l'autre, et relient ainsi l'élément de bord (8) avec la tôle de protection contre la chaleur (4).

2. Elément de protection contre la chaleur (2) selon la revendication 1, dans lequel le matériau élastique comprend un matériau silicone résistant à la chaleur, un matériau polymère fluoré résistant à la chaleur et/ou un matériau de fibre résistant à la chaleur.

3. Elément de protection contre la chaleur (2) selon la revendication 1 ou 2, dans lequel au moins un élément de bord (8) est façonné directement sur la tôle de protection contre la chaleur (4).

4. Elément de protection contre la chaleur (2) selon la revendication 1, 2 ou 3, dans lequel au moins un élément de bord (8) est fixé avec des vis ou des rivets sur la tôle de protection contre la chaleur (4).

5. Elément de protection contre la chaleur (2) selon une des revendications précédentes, dans lequel au moins un façonnage de fixation (10) est conçu sur la tôle de protection contre la chaleur (4) comme un bord rabattu (12), et les façonnages de fixation (10) sur l'élément de bord (8) comprennent une zone rabattue (14), dans lequel le bord rabattu (12) et la zone rabattue (14) viennent en prise l'un avec l'autre.

6. Elément de protection contre la chaleur (2) selon une des revendications 1 à 4, dans lequel les façonnages de fixation (10) mis en prise sur la tôle de protection contre la chaleur (4) présentent au moins un crochet (16) et les façonnages de fixation (10) sur l'élément de bord (8) comprennent au moins une ouverture (18), dans lequel respectivement un crochet (16) s'étend à travers respectivement une ouverture (18).

7. Elément de protection contre la chaleur (2) selon une des revendications 1 à 4, dans lequel les façonnages de fixation (10) mis en prise sur la tôle de protection contre la chaleur (4) présentent au moins un profilage (20), et les façonnages de fixation (10) sur l'élément de bord (8) comprennent au moins un profilage complémentaire (22), de sorte que le profilage (20) et le profilage complémentaire (22) viennent reposer l'un sur l'autre et viennent en prise l'un avec l'autre.

8. Elément de protection contre la chaleur (2) selon une des revendications précédentes, dans lequel la tôle de protection contre la chaleur (4) et/ou l'élément de bord (8) est, respectivement sont pourvus à proximité des façonnages de fixation (10) de sécurités anti-perte (24), afin d'empêcher que les éléments de fixation mis en prise se détachent à nouveau l'un de l'autre.

9. Elément de protection contre la chaleur (2) selon une des revendications 1 ou 4 à 8, dans lequel la tôle de protection contre la chaleur (4) et/ou l'élément de bord (8) est, respectivement sont pourvus de biseaux de guidage (26), qui facilitent un montage.

10. Elément de protection contre la chaleur (2) selon une des revendications précédentes 5 à 9, dans lequel l'élément de bord (8) peut être amené en prise sans outil avec la tôle de protection contre la chaleur (4).

11. Elément de protection contre la chaleur (2) selon une des revendications précédentes, dans lequel la tôle de protection contre la chaleur (4) comprend en outre des façonnages de liaison, afin de relier la tôle de protection contre la chaleur (4) avec une autre tôle de protection contre la chaleur (4).

12. Elément de protection contre la chaleur (2) selon une des revendications 1 à 10, dans lequel l'élément de bord (8) présente des façonnages de liaison, afin de relier l'élément de bord (8) avec un autre élément de bord (8) supplémentaire constitué d'un matériau élastique.

13. Elément de protection contre la chaleur (2) selon la revendication 12, dans lequel le matériau élastique de l'autre élément de bord supplémentaire (8) comprend un matériau silicone résistant à la chaleur, un matériau polymère fluoré résistant à la chaleur et/ou un matériau de fibre résistant à la chaleur.

14. Elément de protection contre la chaleur (2) selon une des revendications précédentes, dans lequel l'élément de bord (8) est pourvu en outre au moins partiellement d'un revêtement réfléchissant (28).

15. Elément de protection contre la chaleur (2) selon une des revendications précédentes, dans lequel l'élément de bord (8) est conçu en outre comme un matériau composite, sur lequel une structure métallique est appliquée ou dans lequel une structure métallique est montée.

16. Elément de protection contre la chaleur (2) selon une des revendications précédentes, dans lequel l'élément de bord (8) est pourvu en outre d'une structure de surface (30), pour améliorer les propriétés d'insonorisation de l'élément de protection contre la chaleur (2).
